# EUROPEAN PATENT APPLICATION

(11) **EP 1 653 378 A2**
(43) Date of publication of application: **03.05.2006**
(21) Application number: 05077404.1
(22) Date of filing: 19.10.2005
(51) Int. Cl.: G06F 17/30

(54) **System and method for data entry and search**

(30) Priority: 28.10.2004 US 975262
(71) Applicant: Delphi Technologies, Inc., Troy, MI 48007 (US)
(72) Inventor: Sencaj, Randall W., Carmel, IN 46032 (US); Kiel, Daniel D., Indianapolis, IN 46260 (US); Toms, Mona L., Carmel, IN 46032 (US)
(74) Representative: Denton, Michael John

(57) **Abstract**

A method for entering and processing a search for geographical information. The method comprises the steps of providing a database including a plurality of data tables, which are non-hierarchically indexed; providing a search field (14, 16, 18, 20) corresponding to each one of the plurality of data tables, the search fields being non-sequential relative to one another; and inputting either partial or complete information into any one or more of the search fields. The input of information into the search fields may be performed non-sequentially. The input of partial information into the search field yields an unresolved field (16) and the input of complete information into the search field yields a resolved field (14). The method further includes searching the database for information matching both the unresolved fields and the resolved fields, and retrieving one or more results. Each of the results includes the information inputted into both the unresolved field and resolved fields.

## Description

### TECHNICAL FIELD

The present invention relates to systems and methods for entering data into, and searching for data contained in, a database.

### BACKGROUND OF THE INVENTION

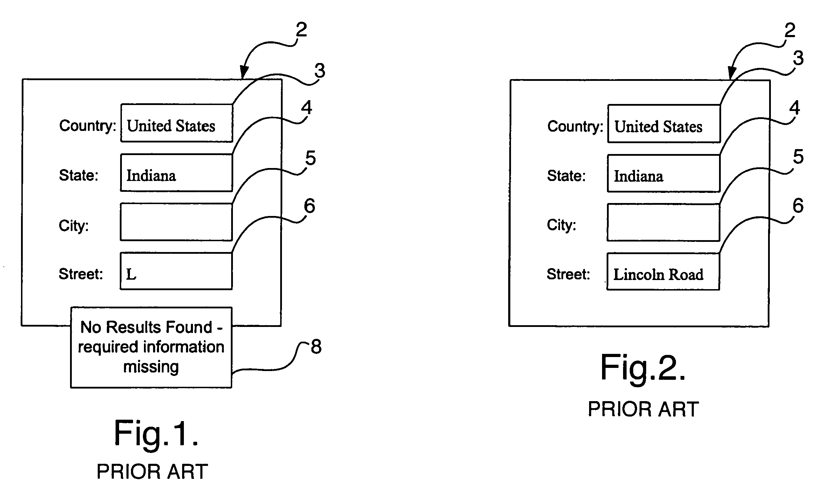

Current methods for entering data into a database and for searching a database commonly involve entering data into search fields and using smart speller algorithms to search the database for information matching the entered data. These methods may provide for either non-sequential or sequential data entry. In sequential data entry, the search fields are in a sequential relationship relative to one another. Consequently, an upper level field must be resolved before entry is allowed into a lower level field. In other words, complete information must be entered into the upper level fields before moving to lower level fields. For instance, referring to FIG. 1, search screen 2 has a country field 3, a state field 4, a city field 5, and a street field 6, which are sequential to one another. Country field 3 is resolved and state field 4 is resolved. However, city field 5 has not been resolved. As a result, when an attempt is made to enter information into street field 6, the system displays an error message 8 indicating that required information is missing. In non-sequential data entry, upper level fields do not have to be resolved before data entry is allowed in lower level fields. For example, as shown in FIG. 2, the search screen 2 allows the user to enter data into the street field 6 even though the city field 5 is not resolved.

Regardless of whether the system provides sequential or non-sequential data entry, the search filter of the database is typically based on only the resolved upper level fields, and does not consider unresolved fields. As a result, current data entry and search methods are often inflexible and time consuming, taking as long as several minutes to complete. In addition, the current methods can lead the user down several dead-end paths before obtaining proper results.

Furthermore, the database typically stores information in a series of tables or lists. Commonly, these tables are indexed or arranged hierarchically in which the tables are linked to one another by a single key field or pointer. In such a hierarchical arrangement, one table serves as a root or parent table and the remaining tables branch hierarchically from the parent, thus creating levels of tables. Unfortunately, this hierarchical arrangement does not allow entry of data into lower level tables without entering data into the parent and upper level tables, thus requiring additional keystrokes and information.

Accordingly, a need remains for an efficient and flexible method for data entry and data searching that reduces the number of keystrokes and/or time-consuming progressions down possible dead-end paths.

### SUMMARY OF THE INVENTION

The present invention provides a system and method for efficiently entering and searching data. In one form, the present invention provides a method for entering and processing a search for navigational information. The method comprises the steps of providing a navigational database including a plurality of data tables, which are non-hierarchically indexed; providing a search field corresponding to each one of the plurality of data tables, the search fields being non-sequential relative to one another; and inputting either partial or complete information into any one or more of the search fields. The input of information into the search fields may be performed non-sequentially. The input of partial information into the search field yields an unresolved field and the input of complete information into the search field yields a resolved field. The method further includes searching the navigational database for information matching both the unresolved fields and the resolved fields, and retrieving one or more results. Each of the results includes the information inputted into both the unresolved field and resolved fields.

In another form, the present invention provides a method for entering and processing a search of a database. The method comprises the step of providing multiple search fields, which are related to one another. The method also includes the step of entering either complete or partial information in any sequence into any of the multiple search fields. The entry of complete information into a search field results in a resolved search field and the entry of partial information into a search field results in an unresolved search field. The method also comprises the step of retrieving one or more results from the database. Each of the one or more results includes the information entered in both the resolved search fields and the unresolved search fields.

In yet another form, the present invention provides a system for providing geographical information. The system comprises a database including a plurality of data lists indexed non-hierarchical to one another and a search tool. The search tool includes a search field relating to each one of the plurality of data lists. Each of the search fields is capable of receiving either partial input or complete input. The search fields are non-sequential to one another. The search tool searches the database non-sequentially for results matching both the partial input and complete input in the search fields.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
FIG. 1 is a schematic of a search tool in accordance with the prior art;
FIG. 2 is a schematic of another search tool in accordance with the
prior art;
FIG. 3 is a schematic of a search tool in accordance with one embodiment of the present invention;
FIG. 4 is a schematic of a search tool in accordance with another embodiment of the present invention; and
FIG. 5 is a schematic of a search tool in accordance with another embodiment of the present invention.

Corresponding reference characters indicate corresponding parts throughout the several views. Although the drawings represent embodiments of the present invention, the drawings are not necessarily to scale and certain features may be exaggerated in order to better illustrate and explain the present invention. The exemplification set out herein illustrates an embodiment of the invention, in one form, and such exemplification is not to be construed as limiting the scope of the invention in any manner.

### DESCRIPTION OF THE PREFERRED EMBODIMENT

The embodiments hereinafter disclosed are not intended to be exhaustive or limit the invention to the precise forms disclosed in the following description. Rather the embodiments are chosen and described so that others skilled in the art may utilize its teachings.

A system in accordance with one embodiment of the present invention generally includes one or more databases and a search tool adapted to search the databases. The system of the present system may be used in a variety of applications including, for example, a navigational or geographical application. In a navigational application the database stores information relating to geographic locations in searchable lists or tables. The lists or tables are relational with respect to one another and are indexed non-hierarchically to one another. In other words, the lists or tables are not linked in a hierarchical arrangement by a key field or pointer wherein one table serves as the parent table and the remaining tables branch hierarchically from the parent table creating levels of tables. Instead, the tables are relational and are connected by a non-hierarchical link of data that joins data in the tables. For instance, the navigational database might store street address information for particular geographic locations. The address information may be broken down into different categories such as addressee name, city and/or township, state and/or province, street name, address number, and/or any other useful information including that which may be stored in V-card format. The database includes a table or list relating to each of these categories in which information relating to these categories is stored. Each geographic location entry in the database is represented by an address ID which links the city, state, street and address number tables to provide the complete street address of the particular geographic location.

The search tool includes a data entry screen having a search field corresponding to each of the database tables. Each search field is capable of receiving data entered by a user. The data may be entered by any conventional data entry means including, for example, a keyboard, a mouse, a touch screen or voice recognition system. The search fields are non-sequential relative to one another; that is, the search fields are not related to one another in a particular sequence or order. Thus, data may be entered into the search fields in any order and one particular search field need not be completed before moving to another search field. Furthermore, the search fields are adapted to receive partial or complete input. When partial information is input into a field, for example when only the first few letters of a state are entered, that field is considered unresolved. When the complete information is entered into a search field that field is considered to be resolved. The search tool is adapted to search the tables of the database to find all address IDs that include all the information, partial and complete, inputted into all search fields. The search tool may use smart speller algorithms to accomplish the search. Because the search fields are non-sequential to one another and the tables are indexed non-hierarchically to one another, a particular search field need not be resolved before moving to the next field and the search is not confined to the resolved fields. As a result, the user may skip a field or may enter partial information into that field.

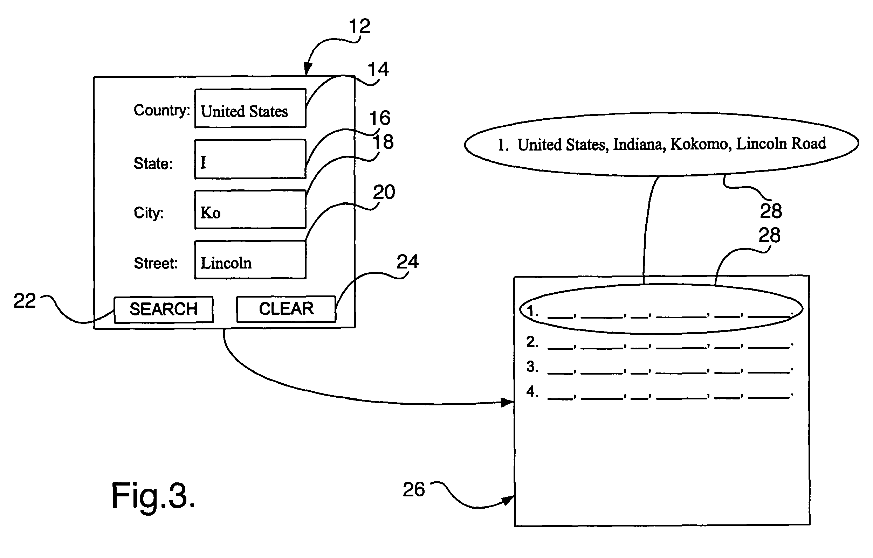

By way of the example shown in FIG. 3, the operation of one embodiment of the present invention will now be described. In this example a user of a navigational system searches the database for a particular geographic location by entering information into data entry screen 12. The user knows that the geographic location is in the United States and, therefore, enters "United States" in country field 14. The user also knows that the geographic location is in a Midwestern state beginning with the letter "I," but cannot recall whether it is in Illinois, Iowa or Indiana. Consequently, the user simply enters an "I" in state field 16 resulting in an unresolved field. The user also recalls that the city name begins with a "Ko" and, therefore, enters the letters "Ko" in city field 18. Finally, the user enters the street name as "Lincoln" in the street field 20. The user then hits search button 22, which initiates a search of the database for all address IDs having information matching all resolved and unresolved fields. The results of the search are shown in results screen 26, which displays the details of every address ID that includes all of the information entered into the resolved and unresolved fields. For instance, the first address ID 28 listed in results screen 26 represents a location on Lincoln Road in the city of Kokomo, in the state of Indiana, and the country of United States. As is demonstrated in this example, the search tool of the present invention does not require that upper level fields be resolved before data entry into lower level fields. Rather, a user may enter data in any field without resolving the fields above it. For instance, in this case the present invention allowed the user to enter a "Ko" in the city field without resolving the state field. Furthermore, the present invention does not confine its search of the database to only the resolved fields. As shown in the resulting address ID 28, the search will return only results that include all the information entered into all the fields, whether or not the field is resolved.

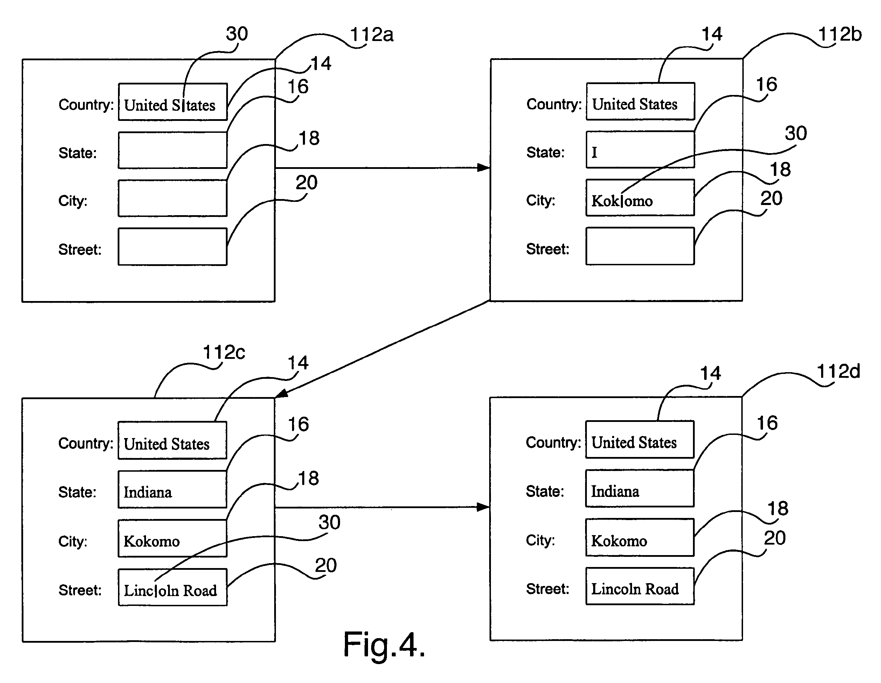

Turning to FIG. 4, the operation of another embodiment of the present invention will be described. In this embodiment, the user enters information into the search screens 112a-d. Referring first to search screen 112a, the user begins entering the country information in country field 14. As the user enters the information, the search tool searches the database for a match. When the user enters enough information or letters to yield a match, the search will return with either the next letter for all countries beginning with those letters, or a string of letters representing a match. The next letter or string of letters appears after cursor 30, which marks the user's place in the field. The user can either press enter on the keyboard to accept the string of letters or continue entering letters. Moving to search screen 112b, the user enters an "I" in state field 16 and begins entering "Kok" into city field 18. The search returns with the remaining string of letters for a city beginning with the letters "Kok," which is in a state starting with the letter "I," which is in the United States. The user accepts the letters and, as shown in search screen 112c, the search tool enters the remainder of the city and the state. The user then begins entering the street name in street field 20. The user enters the letters "Linc" and the search returns with the string of letters completing the street name after cursor 30. The user accepts the letters and search screen 112d displays the full geographic information for the location.

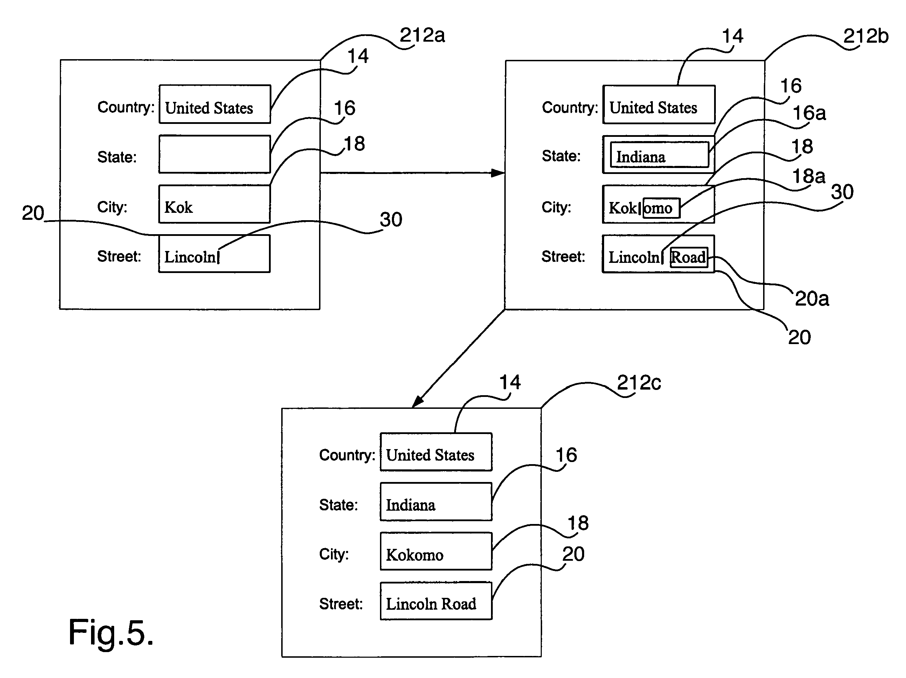

Referring now to FIG. 5, yet another example of the present invention will be described. In this example, the user begins by entering "United States" in country field 14 of search screen 212a. The user cannot recall any information about the state and, thus, skips state field 16. The user enters "Kok" in city field 18, as shown in search screen 212a. The user next enters the street name as "Lincoln," as shown in search screen 212. As a result, the search tool returns results for the state, city and remaining street information in subfields 16a, 18a and 2a, respectively. If the user agrees with these results, he may accept them, which yields the result screen 212c.

In practical application, this tool may be used to search a navigational database and ultimately access a map and/or directions for reaching the location. Alternatively, or additionally, this tool may be used to more quickly enter data into a database system. The automatic return of a string of letters for matching information reduces the number of keystrokes, thereby improving the efficiency of the data entry. The system may be incorporated into a variety of applications including on-board vehicle computer systems, handheld mobile devices, and stationary computer systems.

It should be understood that the systems shown in FIGS. 3-5 are merely exemplary. The system may include a variety of different fields and may be used in a variety of different applications. For instance, the system may be used in an electronic phone book application and may include fields such as contact name, street address, phone number, fax number, and e-mail address. As shown in FIG. 3, the search screen 12 may also include a clear button for clearing all the data entered and obtaining clear fields.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method for entering and processing a search for geographical information, the method **characterized by** the steps of:
providing a geographical database, the geographical database including a plurality of data tables, the data tables being non-hierarchically indexed;
providing a search field (14, 16, 18, 20) corresponding to each one of the plurality of data tables, the search fields being non-sequential relative to one another;
inputting either partial or complete information into any one or more of the search fields, wherein the input of information into the search fields may be performed non-sequentially and wherein the input of partial information into one of the search fields yields an unresolved field (16) and the input of complete information into one of the search fields yields a resolved field (14);
searching the geographical database for information matching both the unresolved fields and the resolved fields; and
retrieving one or more results, each of the results including the information inputted into both the unresolved field and resolved fields.

2. The method of claim 1 wherein the database is an address book database and the plurality of data fields includes one or more of a state/province field (16), a city/township field (18), a street field (20), an addressee name field, a telephone number field, and an address number field.

3. The method of claim 1 wherein the plurality of data fields includes information that can be stored in V-card format.

4. A method for entering and processing a search of a database **characterized by** the steps of:
providing multiple search fields (14, 16, 18, 20), the multiple search fields being non-sequential relative to one another;
entering information in any sequence into any one or more of the multiple search fields, the information being either complete information or partial information, wherein the entry of complete information results in a resolved search field and the entry of partial information results in an unresolved search field; and
retrieving one or more results from the database, each of the one or more results including the information entered in both the resolved search fields and the unresolved search fields.

5. The method of claim 4 wherein the database is a navigational database including geographic locations.

6. The method of claim 5 wherein the navigational database includes a state/province list, a city/township list and a street name list, and wherein one of the multiple search fields is a state field (16), another of the multiple search fields is a city field (18), and another of the multiple search fields is a street field (20).

7. The method of claim 6 wherein the database includes an address numbers list and another of the multiple search fields is an address number field.

8. The method of claim 6 wherein the database includes a country list and another of the multiple search fields is a country field (14).

9. The method of claims 1 or 4 wherein the navigational database is incorporated into a vehicle navigational system.

10. The method of claims 1 or 4 wherein the navigational database is incorporated into a hand-held device.

11. A system for providing geographical or address book information, the system **characterized by**:
a database including a plurality of data lists, said plurality of data lists indexed non-hierarchical to one another;
a search tool (12) including a search field (14, 16, 18, 20) relating to each one of said plurality of data lists, each of said search fields capable of receiving either partial input or complete input, said search fields being non-sequential to one another, wherein said search tool searches said database non-sequentially for results matching both the partial input and complete input in said search fields.

12. The system of claim 11 wherein said search tool is incorporated into a vehicle navigation system.

13. The system of claim 11 wherein said plurality of lists includes a state list, a city list and an address list, and said search tool having a state field (16), a city field (18) and an address field, said state, city and address fields capable of receiving partial or complete state names, city names and addresses respectively, and wherein said search tool searches said database for results containing the partial and complete state names, city names and address names inputted.

14. The system of claim 13 wherein said plurality of lists further includes a country list and said search tool includes a country field (14).
